# EUROPEAN PATENT APPLICATION

(11) **EP 4 716 000 A1**
(43) Date of publication of application: **25.03.2026**
(21) Application number: 24849619.2
(22) Date of filing: 31.07.2024
(51) Int. Cl.: H01M 50/581, H01M 50/152

(54) **CAP ASSEMBLY AND SECONDARY BATTERY COMPRISING SAME**

(30) Priority: 01.08.2023 KR 20230100712
(71) Applicant: LG Energy Solution, Ltd., Seoul 07335 (KR)
(72) Inventor: KANG, Gyung Soo, Daejeon 34122 (KR); YU, Hyung Kyun, Daejeon 34122 (KR)
(74) Representative: Goddar, Heinz J.
(86) International application number: PCT/KR2024/011269
(87) International publication number: WO 2025/029052

(57) **Abstract**

A cap assembly of the present disclosure includes a top cap; and a CID module provided below the top cap and cutting off a current when a temperature inside the secondary battery rises above the deformation temperature, wherein the CID module includes an upper plate provided below the top cap and having a protrusion; a lower plate provided below the upper plate and contacting only the protrusion; an insulating plate provided between the edge of the upper plate and the edge of the lower plate; and a deformation body that is provided between the upper plate and the lower plate and separates the protrusion and the lower plate so that the current does not pass therethrough by lifting the upper plate when a temperature of the secondary battery rises above the deformation temperature.

## Description

### TECHNICAL FIELD

### CROSS-REFERENCE TO RELATED APPLICATIONS

The present application claims priority to Korean Patent Application No. 10-2023-0100712 filed on August 1, 2023 in the Republic of Korea, the disclosures of which are incorporated herein by reference.

### TECHNICAL FIELD

The present disclosure relates to a cap assembly having improved safety by applying a bimetal and a secondary battery including the same.

### BACKGROUND ART

In general, a secondary battery is classified into a cylindrical secondary battery in which an electrode assembly is embedded into a cylindrical metal can, a prismatic secondary battery in which an electrode assembly is embedded into a prismatic metal can, and a pouch-type secondary battery in which an electrode assembly is embedded into a pouch-type case.

Additionally, the electrode assembly is composed of a stacked structure of a positive electrode/separator/negative electrode, and such an electrode assembly is classified into a jelly-roll type structure in which a separator is interposed between a long sheet-like positive electrode and negative electrode coated with an active material and wound, and a stack type structure in which a plurality of positive electrodes and negative electrodes of a predetermined size are sequentially stacked with a separator interposed therebetween.

Among them, the jelly-roll type electrode assembly is the most widely manufactured because it has the advantages of easy manufacturing and high energy density per weight, and the jelly-roll type electrode assembly is typically manufactured as a cylindrical secondary battery.

That is, the cylindrical secondary battery includes an electrode assembly, a can that accommodates the electrode assembly, and a cap assembly mounted on an opening of the can.

Such a cylindrical secondary battery may be deformed while the jelly-roll type electrode assembly repeatedly expand and contract during charging and discharging, thereby causing an internal short circuit. As a result, gases are generated as the organic solvent is decomposed due to heat generated by the internal short circuit, and the secondary battery may explode or rupture due to an increase in gas pressure inside the secondary battery.

To solve the above problems, the cap assembly of the cylindrical secondary battery includes a safety vent that discharges high-pressure gas and a current interrupt device (CID) that cuts off the current when the internal pressure of the secondary battery rises.

However, conventional cylindrical secondary batteries have limitations in increasing safety as high capacity is realized, and accordingly, there is a need for structural improvement to increase the safety of the secondary battery.

### [Prior art literature]

### [Patent literature]

(Patent literature 1) Patent Publication No. 10-2018-0000115.

### SUMMARY

### TECHNICAL PROBLEM

The present disclosure is directed to providing a cap assembly, which may rapidly cut off a current when a high temperature occurs by including a CID module applying a bimetal, thereby significantly improving safety, and a secondary battery including the same.

### TECHNICAL SOLUTION

A cap assembly of the present disclosure may include a top cap; and a CID module provided below the top cap and cutting off a current when a temperature inside the secondary battery rises above the deformation temperature, wherein the CID module may include an upper plate provided below the top cap and having a protrusion; a lower plate provided below the upper plate and contacting only the protrusion; an insulating plate provided between the edge of the upper plate and the edge of the lower plate; and a deformation body that is provided between the upper plate and the lower plate and separates the protrusion and the lower plate so that the current does not pass therethrough by lifting the upper plate when a temperature of the secondary battery rises above the deformation temperature.

The deformation body may have a structure in which a first deformation layer and a second deformation layer are disposed in multiple stages, and the first deformation layer may have a greater coefficient of thermal expansion than the second deformation layer at the same temperature.

The deformation body may be formed of a bimetal that is deformed at the deformation temperature.

An insulator may be further provided on the outer surface of the first deformation layer or the outer surface of the second deformation layer.

The insulator may have a smaller thickness than the first deformation layer or the second deformation layer.

A through hole may be formed in the deformation body so that the protrusion passes therethrough.

An insulating layer may be coated on the inner circumferential surface of the through hole of the deformation body.

The first deformation layer may be formed thicker than the second deformation layer.

An insertion groove into which the deformation body is inserted may be formed in the lower plate.

The deformation temperature may be 70 °C or higher.

A secondary battery of the present disclosure may include a cap assembly.

### ADVANTAGEOUS EFFECTS

A cap assembly of the present disclosure includes a top cap; and a CID module provided below the top cap and cutting off a current when a temperature inside the secondary battery rises above the deformation temperature, so that the current may be rapidly cut off when a high temperature occurs in the secondary battery, thereby significantly improving safety.

### BRIEF DESCRIPTION OF THE DRAWINGS

FIG. 1 is a perspective view showing a secondary battery according to Embodiment 1 of the present disclosure.
FIG. 2 is a partial cross-sectional view of FIG. 1.
FIG. 3 is a perspective view showing a deformation body included in a secondary battery according to Embodiment 1 of the present disclosure.
FIG. 4 is a cross-sectional view showing a deformation body included in a secondary battery according to Embodiment 1 of the present disclosure.
FIG. 5 is a cross-sectional view showing a deformed state of the deformation body shown in FIG. 4.
FIG. 6 is a cross-sectional view showing another example of a deformation body included in a secondary battery according to Embodiment 1 of the present disclosure.
FIG. 7 is a cross-sectional view showing a deformed state of the deformation body shown in FIG. 6.
FIG. 8 is a cross-sectional view showing a current cut-off state of a secondary battery according to Embodiment 1 of the present disclosure.
FIG. 9 is a cross-sectional view showing a CID module included in a secondary battery according to Embodiment 2 of the present disclosure.
FIG. 10 is a partial enlarged view of FIG. 9.
FIG. 11 is a cross-sectional view showing a deformation body of a secondary battery according to Embodiment 2 of the present disclosure.

### DETAILED DESCRIPTION

Hereinafter, embodiments of the present disclosure will be described in detail with reference to the accompanying drawings to enable those having ordinary skill in the technical field pertaining to the present disclosure to easily carry out the present disclosure. However, the present disclosure may be embodied in many different forms and is not limited to the embodiments described herein. And, to clearly describe the present disclosure in the drawings, irrelevant descriptions are omitted, and similar reference numerals are affixed to the similar elements throughout the specification.

### [Secondary battery according to embodiment 1 of the present disclosure]

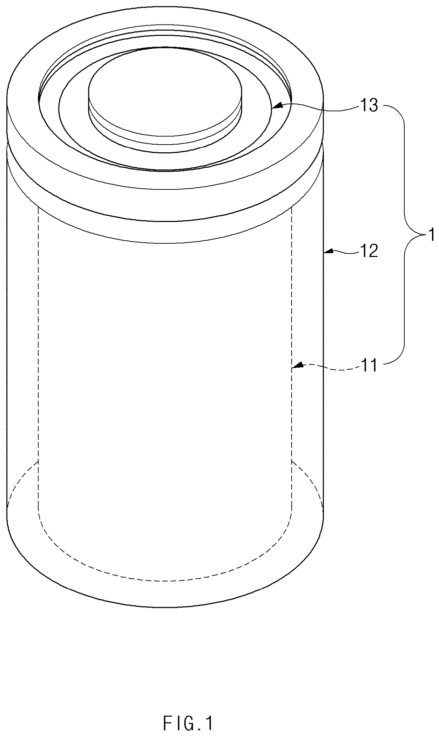

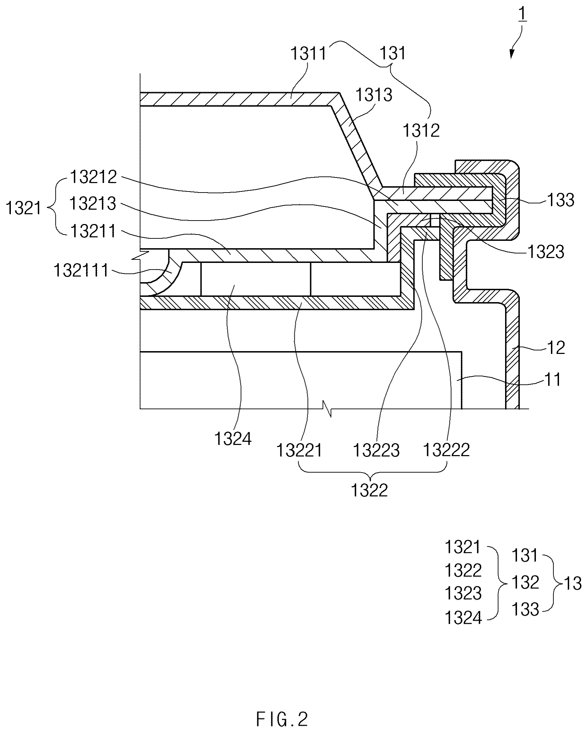

FIG. 1 is a perspective view showing a secondary battery according to Embodiment 1 of the present disclosure, and FIG. 2 is a partial cross-sectional view of FIG. 1.

The secondary battery 1 of the present disclosure includes an electrode assembly 11, a can 12 accommodating the electrode assembly 11, and a cap assembly 13 mounted on an opening of the can 12, as shown in FIGS. 1 and 2.

### Electrode assembly

The electrode assembly 11 includes two electrodes having different polarities and a wide plate shape in the form of a roll, and a separator interposed between the electrodes or disposed below or above any one of the electrodes to insulate the electrodes from each other, wherein the two electrodes and the separator have a structure in which they are wound in the form of a 'jelly roll'.

And, the two electrodes have structures in which an active material slurry is applied to a current collector in the form of a metal foil or metal mesh including aluminum and copper, respectively.

Here, the two electrodes may be a positive electrode and a negative electrode.

Meanwhile, the positive electrode is provided with a positive electrode tab, and the positive electrode tab is connected to the cap assembly 13. And, the negative electrode is provided with a negative electrode tab, and the negative electrode tab is connected to the bottom surface of the can 12.

### Can

As shown in FIG. 1, the can 12 is made of a lightweight conductive metal material such as aluminum or an aluminum alloy, and has a cylindrical structure having an open top and a closed bottom opposite to the open top. And, the electrode assembly 11 and an electrolyte solution (not shown) are accommodated inside the can 12.

Meanwhile, the electrolyte solution is intended to move lithium ions generated by an electrochemical reaction in the positive electrode and the negative electrode during charging and discharging of the secondary battery. For example, the electrolyte solution may be a non-aqueous organic electrolyte solution that is a mixture of a lithium salt and a high purity organic solvent, or a polymer using a polymer electrolyte.

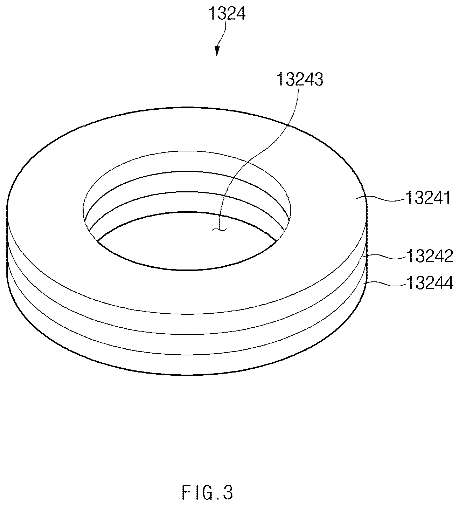

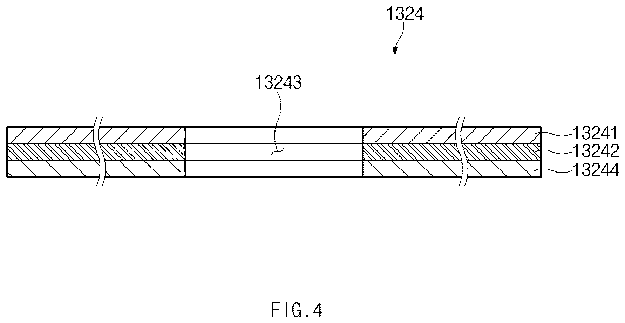

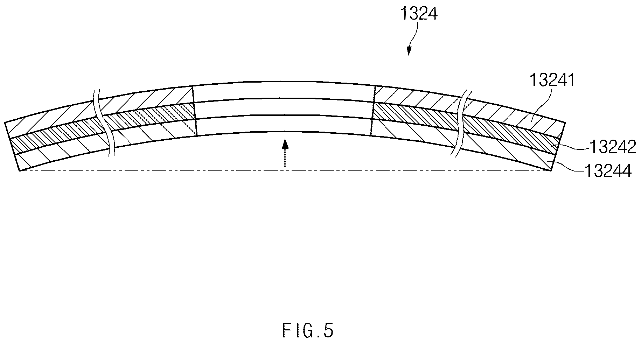

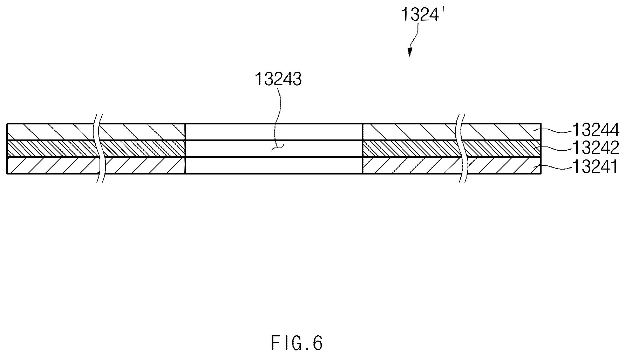

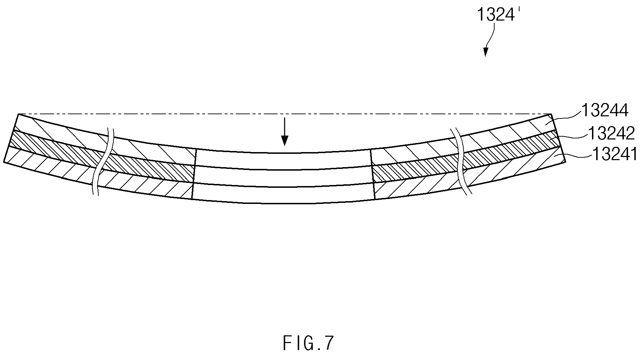

FIG. 3 is a perspective view showing a deformation body included in a secondary battery according to Embodiment 1 of the present disclosure, FIG. 4 is a cross-sectional view showing a deformation body included in a secondary battery according to Embodiment 1 of the present disclosure, FIG. 5 is a cross-sectional view showing a deformed state of the deformation body shown in FIG. 4, FIG. 6 is a cross-sectional view showing another example of a deformation body included in a secondary battery according to Embodiment 1 of the present disclosure, and FIG. 7 is a cross-sectional view showing a deformed state of the deformation body shown in FIG. 6.

### Cap assembly

The cap assembly 13 is mounted on the opening of the can 12, and includes a top cap 131 that supplies electricity to an external circuit, a current interrupt device (CID) module that cuts off a current when a temperature inside the secondary battery rises above the deformation temperature, and a gasket 133 that surrounds the edges of the top cap 131 and the CID module 132 and is coupled to the opening of the can.

The top cap 131 includes a terminal portion 1311 in contact with an electric circuit, a top cap circumferential portion 1312 formed along the edge of the terminal portion 1311, and a top cap connection portion 1313 that connects the terminal portion 1311 and the top cap circumferential portion 1312 and forms a step between the top cap circumferential portion 1312 and the terminal portion 1311.

On the other hand, high-temperature gas may be generated in the secondary battery 1 as the organic solvent is decomposed due to heat generated by an internal short circuit during charging and discharging, and accordingly, an explosion or rupture may occur due to an increase in gas pressure inside the secondary battery 1.

In order to solve the above problem, a CID module 132 capable of rapidly cutting off the current when a high temperature above the deformation temperature occurs is included.

The CID module 132 is provided below the top cap 131 and cuts off the current when a temperature inside the secondary battery 1 rises above the deformation temperature, and includes an upper plate 1321, a lower plate 1322, an insulating plate 1323, and a deformation body 1324.

The upper plate 1321 includes a contact portion 13211 provided below the top cap 131 and having a protrusion 132111 protruding downward, an upper plate circumferential portion formed along the edge of the contact portion 13211 and in contact with the top cap circumferential portion 1312, and an upper connection portion 13213 that connects the contact portion 13211 and the upper plate circumferential portion and forms a step between the contact portion 13211 and the upper plate circumferential portion.

The lower plate 1322 is provided below the upper plate 1321, and includes a support portion 13221 supported so as to be in contact with only the protrusion 132111 of the upper plate, a lower plate circumferential portion formed along the edge of the support portion 13221 and corresponding to the upper plate circumferential portion, and a lower connection portion 13223 that connects the support portion 13221 and the lower plate circumferential portion and forms a step between the lower plate circumferential portion and the support portion 13221.

The insulating plate 1323 is intended to insulate the remaining portions of the upper plate 1321 and the lower plate 1322 from contact, except for the contact between the protrusion 132111 and the support portion 13221, and insulates the upper circumferential portion 13212 and the lower circumferential portion 13222 from each other while being provided between the upper circumferential portion 13212 and the lower circumferential portion 13222. Meanwhile, the insulating plate 1323 may be formed of a material such as epoxy, polyethylene, polypropylene, or the like.

The deformation body 1324 is provided between the contact portion 13211 of the upper plate 1321 and the support portion 13221 of the lower plate 1322, and when a temperature of the secondary battery 1 rises above the deformation temperature, the deformation body 1324 separates the protrusion 132111 and the lower plate 1322 so that the current does not pass therethrough by lifting the upper plate 1321, and accordingly, the current generated in the secondary battery 1 may be rapidly cut off.

That is, the deformation body 1324 has a structure in which a first deformation layer 13241 and a second deformation layer 13242 are disposed in multiple stages, and the first deformation layer 13241 has a greater coefficient of thermal expansion than the second deformation layer 13242 at the same temperature. In summary, the second deformation layer 13242 has a structure that expands less than the first deformation layer 13241, and the first deformation layer 13241 has a structure that expands more than the second deformation layer 13242.

And, the deformation body 1324 may be provided in a donut shape with a through hole 13243 formed so that the protrusion 132111 passes therethrough. Accordingly, since the deformation body 1324 is supported on the protrusion 132111, the fixing force may be increased.

Accordingly, when a temperature of the secondary battery 1 rises above the deformation temperature, the deformation body 1324 is deformed to a greater extent in the first deformation layer 13241 having a greater coefficient of thermal expansion than the second deformation layer 13242, as shown in FIG. 5, and accordingly, the height of the deformation body 1324 increases as the second deformation layer 13242 bends in the direction where it is located, at which time, the deformation body 1324 may separate the protrusion 132111 and the support portion 13221 so as not to contact each other while lifting the upper plate 1321.

Here, the deformation body 1324 may be formed of a bimetal that is deformed at the deformation temperature. Meanwhile, a bimetal refers to a combination of two thin metal sheets having different thermal expansion rates. That is, when the temperature increases, the lengths of the bimetal become different due to the difference in expansion rates, and the bimetal bends toward the metal sheet with the smaller expansion rate, and when the temperature decreases, the bimetal bends toward the opposite side.

For example, the first deformation layer 13241 may be nickel (Ni) and iron (Fe), and the second deformation layer 13242 may be an alloy of nickel-manganese and iron, an alloy of nickel-molybdenum-iron, or an alloy of nickel-manganese-copper.

Meanwhile, the CID module 132 may be provided with an insulator 13244 for insulating between the deformation body 1324 and the upper plate 1321 or between the deformation body 1324 and the lower plate 1322. That is, an insulator 13244 may be further provided so that the upper plate 1321 and the lower plate 1322 are not electrically connected by the deformation body 1324.

Here, the insulator 13244 may be provided to cover the entire bottom surface of the second deformation layer 13242 when the first deformation layer 13241 and the second deformation layer 13242 are disposed up and down, as shown in FIGS. 3 and 4. Accordingly, when the deformation body 1324 is deformed, the outer edge of the deformation body 1324 is deformed downward to increase in height, and at this time, the upper plate 1321 may be lifted.

On the other hand, the insulator 13244 may be provided to cover the entire top surface of the first deformation layer 13241 when the second deformation layer 13242 and the first deformation layer 13241 are disposed up and down, as shown in FIG. 6. Accordingly, when the deformation body 1324 is deformed, the outer edge of the deformation body 1324 is deformed upward to increase in height, and at this time, the upper plate 1321 may be lifted.

Therefore, by including the insulator 13244, the CID module 132 may insulate between the deformation body 1324 and the upper plate 1321 or between the deformation body 1324 and the lower plate 1322 even when the deformation body 1324 is deformed.

Meanwhile, the insulator 13244 may be formed of a material having elasticity so as to be deformed together with the deformation body 1324. For example, the insulator 13244 may be polyethylene (PE).

Meanwhile, the deformation temperature may be 70 °C or higher, preferably, 100 °C or higher. Here, when the deformation temperature is 70 °C or lower, there is a problem that the deformation body 1324 may be deformed even in a heat source generated during normal operation of the secondary battery 1.

Hereinafter, a modified example of the secondary battery 1 according to Embodiment 1 of the present disclosure will be described with reference to the accompanying drawings.

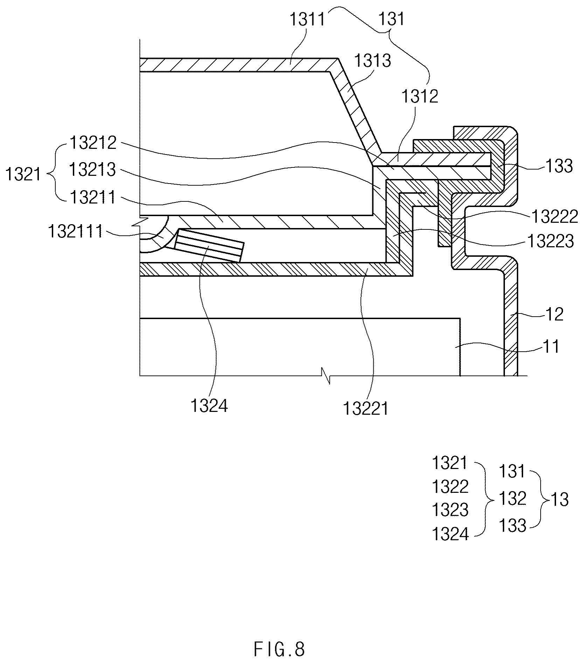

As shown in FIG. 8, the jelly-roll type electrode assembly is deformed while repeatedly expanding and contracting during charging and discharging of the secondary battery 1, and accordingly, when a temperature inside the secondary battery 1 rises above the deformation temperature due to an internal short circuit, the deformation body 1324 of the CID module 132 is deformed and lifts the upper plate 1321, thereby separating the protrusion 132111 of the upper plate 1321 and the support portion 13221 of the lower plate 1322 to cut off the current.

More specifically, when a temperature inside the secondary battery 1 rises above the deformation temperature, the first deformation layer 13241 and the second deformation layer 13242 of the deformation body 1324 expand, and at this time, the first deformation layer 13241 expands more than the second deformation layer 13242 and bends in the direction of the second deformation layer 13242, thereby increasing the height of the deformation body 1324 and lifting the upper plate 1321. As a result, the protrusion 132111 of the upper plate 1321 is separated from the support portion 13221, so that the current may be rapidly cut off.

At this time, the deformation body 1324 and the upper plate 1321 may be insulated by the insulator 13244 to prevent the current from flowing between the deformation body 1324 and the upper plate 1321.

Therefore, the secondary battery 1 according to Embodiment 1 of the present disclosure includes the cap assembly 13 provided with the CID module 132, so that when a temperature inside the can rises above the deformation temperature, the deformation body 1324 of the CID module 132 may be deformed to block the contact between the upper plate 1321 and the lower plate 1322, resulting in rapidly cutting off the current, thereby improving safety.

Hereinafter, in describing other embodiments of the present disclosure, the same reference numerals are used for configurations having the same function as the above-described embodiments, and redundant descriptions are omitted.

### [Secondary battery according to embodiment 2 of the present disclosure]

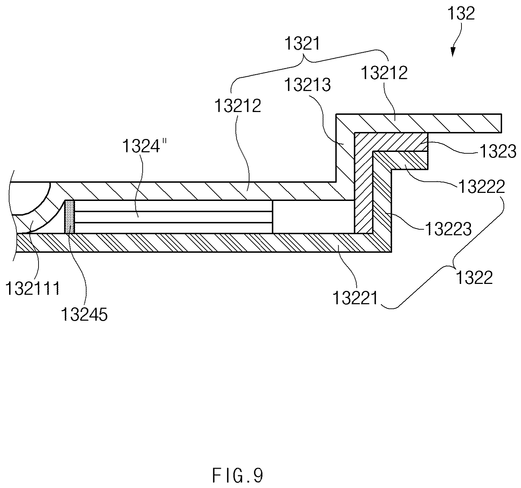

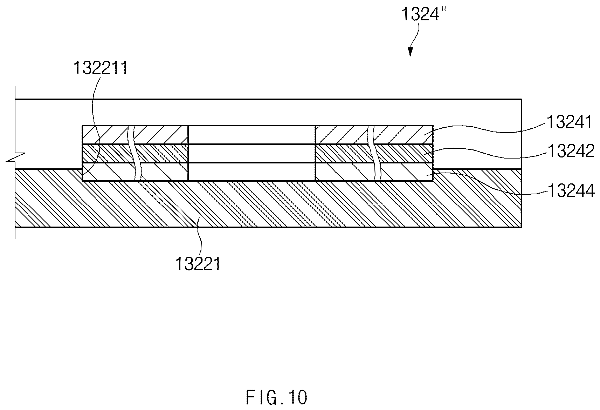

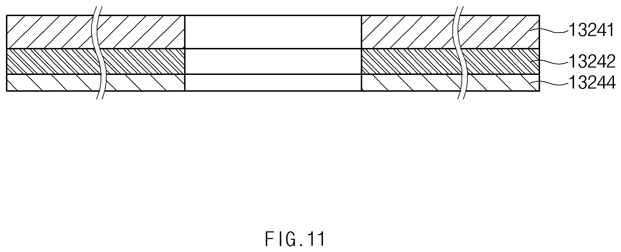

FIG. 9 is a cross-sectional view showing a CID module included in a secondary battery according to Embodiment 2 of the present disclosure, FIG. 10 is a partial enlarged view of FIG. 9, and FIG. 11 is a cross-sectional view showing a deformation body 1324 of a secondary battery according to Embodiment 2 of the present disclosure.

The secondary battery 1 according to Embodiment 2 of the present disclosure includes an electrode assembly 11, a can 12, and a cap assembly 13, as shown in FIG. 9.

Here, the cap assembly 13 includes a top cap 131 and a CID module 132, wherein the CID module 132 includes an upper plate 1321, a lower plate 1322, an insulating plate 1323, and a deformation body 1324.

Here, the electrode assembly 11, the can 12, and the cap assembly 13 correspond to the electrode assembly 11, the can 12, and the cap assembly 13 described in Embodiment 1, so that overlapping descriptions are omitted.

Meanwhile, an insulating layer 13245 is coated on the inner circumferential surface of the through hole 13243 of the deformation body 1324. That is, in order to insulate the inner circumferential surface of the deformation body 1324 and the protrusion 132111 of the upper plate 1321 from each other, the insulating layer 13245 is coated on the inner circumferential surface of the through hole 13243 of the deformation body 1324. Accordingly, it is possible to prevent the current from flowing between the deformation body 1324 and the protrusion 132111. Meanwhile, the insulating layer 13245 may be formed of the same material as the insulator 13244.

Additionally, the first deformation layer 13241 may be formed thicker than the second deformation layer 13242. Accordingly, the expansion force of the first deformation layer 13241 may be increased more significantly than that of the second deformation layer 13242, thereby increasing the strain of the deformation body 1324, and thus lifting the upper plate 1321 more effectively.

Meanwhile, as shown in FIG. 10, an insertion groove 132211 into which the deformation body 1324 is inserted is formed in the lower plate 1322, and the fixing force of the deformation body 1324 may be increased.

Meanwhile, as shown in FIG. 11, the insulator 13244 may have a smaller thickness than the first deformation layer 13241 or the second deformation layer 13242 in order to minimize the deformability degradation of the deformation body 1324.

The scope of the present disclosure is indicated by the claims described below rather than the detailed description above, and various embodiments derived from the meaning and scope of the claims and the equivalents thereof are possible.

### [List of Reference Numerals]

1: Secondary battery
11: Electrode assembly
12: Can
13: Cap assembly
131: Top cap
1311: Terminal portion
1312: Top cap circumferential portion
1313: Top cap connection portion
132: CID module
1321: Upper plate
13211: Contact portion
132111: Protrusion
13212: Upper circumferential portion
13213: Upper connection portion
1322: Lower plate
13221: Support portion
132211: Insertion groove
13222: Lower circumferential portion
13223: Lower connection portion
1323: Insulating plate
1324: Deformation body
13241: First deformation layer
13242: Second deformation layer
13243: Through hole
13244: Insulator
13245: Insulating layer
133: Gasket

## Claims

1. A cap assembly comprising:
a top cap; and
a CID module provided below the top cap and cutting off current when a temperature inside a secondary battery rises above a deformation temperature,
wherein the CID module comprises:
an upper plate provided below the top cap and having a protrusion;
a lower plate provided below the upper plate and contacting only the protrusion;
an insulating plate provided between an edge of the upper plate and an edge of the lower plate; and
a deformation body that is provided between the upper plate and the lower plate and separates the protrusion and the lower plate so that the current does not pass therethrough by lifting the upper plate when a temperature of the secondary battery rises above the deformation temperature.

2. The cap assembly according to claim 1,
wherein the deformation body has a structure in which a first deformation layer and a second deformation layer are disposed in multiple stages, and
the first deformation layer has a greater coefficient of thermal expansion than the second deformation layer at the same temperature.

3. The cap assembly according to claim 1,
wherein the deformation body is formed of a bimetal that is deformed at the deformation temperature.

4. The cap assembly according to claim 2,
wherein an insulator is further provided on an outer surface of the first deformation layer or an outer surface of the second deformation layer.

5. The cap assembly according to claim 4,
wherein the insulator has a smaller thickness than the first deformation layer or the second deformation layer.

6. The cap assembly according to claim 1,
wherein a through hole is formed in the deformation body so that the protrusion passes therethrough.

7. The cap assembly according to claim 6,
wherein an insulating layer is coated on an inner circumferential surface of the through hole of the deformation body.

8. The cap assembly according to claim 2,
wherein the first deformation layer is formed thicker than the second deformation layer.

9. The cap assembly according to claim 1,
wherein an insertion groove into which the deformation body is inserted is formed in the lower plate.

10. The cap assembly according to claim 1,
wherein the deformation temperature is 70 °C or higher.

11. A secondary battery comprising a cap assembly provided according to claim 1.
